# EUROPEAN PATENT SPECIFICATION

(11) **EP 2 448 418 B1**
(45) Date of publication and mention of the grant of the patent: **04.05.2016**
(21) Application number: 10742882.3
(22) Date of filing: 24.06.2010
(51) Int. Cl.: A23B 7/015, A23B 7/157, A23B 7/158, A23L 3/30, A23L 3/32, A23L 3/358, A23L 3/3589, A23N 12/02, A47J 43/24

(54) **DEVICE AND METHOD FOR CLEANING FOOD**
VORRICHTUNG UND VERFAHREN ZUR NAHRUNGSMITTELREINIGUNG
DISPOSITIF ET PROCÉDÉ POUR NETTOYER UN ALIMENT

(30) Priority: 29.06.2009 CN 200910139891
(43) Date of publication of application: 09.05.2012
(73) Proprietor: Koninklijke Philips N.V., 5656 AE Eindhoven (NL)
(72) Inventor: SHI, Jun, Shanghai 200233 (CN); WANG, Weiran, Shanghai 200233 (CN); KELLY, Declan, Patrick, Shanghai 200233 (CN); ZHANG, Yaonan, Shanghai 200233 (CN); BRAND, Maarten, Leonardus, Christian, Shanghai 200233 (CN); VAN MENSVOORT, Marinus, Jacobus, Waltherus, NL-5680 DA Best (NL)
(74) Representative: Kroeze, Johannes Antonius
(86) International application number: PCT/IB2010/052876
(87) International publication number: WO 2011/001335

(56) References cited:
- WO-A1-00/24431
- WO-A1-2006/009189
- WO-A1-2006/009190
- WO-A1-2006/126039
- CN-A- 101 336 809
- CN-Y- 201 156 968
- CN-Y- 201 239 044
- JP-A- 10 066 553
- JP-A- 10 081 897
- JP-A- 10 110 955
- JP-A- 11 243 934
- JP-A- 2000 220 949
- JP-A- 2007 268 096
- KR-A- 20040 064 406
- KR-A- 20080 081 821
- KR-A- 20090 060 972
- CHYI-SHEN LIN: "Evaluation of electrolysed water as an agent for reducing methamidophos and dimethoate concentrations in vegetables", INTERNATIONAL JOURNAL OF FOOD SCIENCE & TECHNOLOGY, vol. 41, no. 9, 2006, pages 1099-1104, XP002611451, ISSN: 0950-5423

## Description

### TECHNICAL FIELD

The present invention relates to a kitchen appliance, and particularly relates to a device and method for cleaning food.

### BACKGROUND

Vegetables and fruits bought in wet markets and supermarkets often contain trace residues of pesticide applied during the plantation, which can lead to short and long term health problems. Common cleaning methods such as hand washing or soaking the food in water cannot remove most residues. Scrubbing the vegetables can remove some of the residues, but too vigorous scrubbing will damage the vegetable.

Current solutions for removing residues from vegetables and/or fruit use ozone dissolved in water. Ozone gas, however, is toxic for human beings, and it may originate from leaks of water with dissolved ozone, that is inhaled by human beings. Current products of water with dissolved ozone release ozone at a much higher level than the recommended safe levels, thus greatly harming the health of people. To address residues removal in the kitchen, it is necessary to use a clean, safe technology that does not require adding dangerous chemicals and does not release these chemicals into the environment.

Most pesticide can be hydrolyzed in the water at a relatively slow rate. Alkaline water accelerates the hydrolyzation. And the alkaline water is nontoxic for human beings and environmentally friendly. Therefore, it is safe to use alkaline water to remove the pesticide residue from the vegetables and/or fruit. In addition, But it is water-consuming to use alkaline water. Additionally, alkaline water with a relatively higher temperature also accelerates the hydrolyzation. However, an excessively high temperature not only destroys the nutrition of the food, but also cooks them, which influences the appearance and taste of the food by damaging their plant tissue.

KR 2008 0081821 A discloses a method of removing pesticide residues and heavy metals from agricultural products using OH radical characteristics. Alkaline water is subjected to a pH value of 7 to 11 and water temperature of 6 to 11 degrees Celsius in a washing apparatus to produce OH radicals and remove pesticide residues, heavy metals and residual pollutant materials. JP 2000 220949 A discloses a disinfection method of a refrigerator using electrolyzed acid water. A treating water supply source is provided for generating and storing sterilizing or anti-bacterial treating water. This water is sprayed into a high humidity storage chamber in which the food is stored within the refrigerator. A further storage compartment and a refrigerator using such a storage compartment is known from WO 2006/009190 A1. The storage compartment proposed therein comprises a box and a mist sprayer. The box comprises store rooms for field crops therein. The mist sprayer generates mist by spraying a liquid into the store rooms. Then, the mist sprayer raises harmful substances adhered to the surfaces of the field crops stored in the store rooms or adhere the mist to the harmful substances adhered to the surfaces of the field crops stored in the store rooms. Further known systems and methods for cleaning food are, for example, known from JP 10 081897 A, WO 2006/009189 A1 and from CN 201 156 968 Y.

### SUMMARY OF THE INVENTION

It would be an advantage to have a safe and environmentally friendly device and method for removing the residue from food. This device and method should be water saving and not damage the food. Preferably, this device and method should be fast in cleaning.

To address one or more of these concerns, in an embodiment of an aspect of the invention, a device for cleaning food is provided that comprises: a providing unit, for providing alkaline water; and a humidifying unit, connected with said providing unit, for humidifying said alkaline water so as to generate alkaline mist and applying said alkaline mist to the surface of said food, whereby the residue on the surface of said food is hydrolyzed by said alkaline mist.

According to this embodiment of the invention, alkaline mist is used for cleaning the hydrolyzable residues on the surface of the food such as pesticide. It is safe, environmentally friendly, and water saving.

Preferably, the pH value of said alkaline water used by the device is larger than 9. The device comprises an inlet, and uses alkaline water directly poured through the inlet; or further comprises an electrolysis unit for electrolyzing tap water poured through the inlet to generate alkaline water.

Preferably, the device could comprises a pH value controller, for controlling the pH value of said alkaline water according to time set for cleaning said food. The device could also comprise a time controller, for controlling time for cleaning said food according to the pH value of said alkaline water. The shorter the cleaning time is, the higher the pH value of the alkaline water is; and the longer the cleaning time is, the lower the pH value of the alkaline water is. In this way, it does not only guarantee the cleaning effect of the alkaline mist in the device, but also prevents the alkaline substance from damaging the food.

In a preferable embodiment, the device further comprises a heater, which cooperates with the providing unit so as to generate alkaline water heated to a predefined temperature. Therefore the humidifying unit generates heated alkaline mist to clean the vegetables and fruits. In this way, the hydrolysis process of the residues is accelerated and the time for cleaning is shortened. What is more, the heated mist would not damage the food.

In an embodiment of an aspect of the invention, a method for cleaning food is provided that comprises the steps of: providing alkaline water; humidifying said alkaline water so as to generate alkaline mist; and applying said alkaline mist to the surface of said food, whereby the residue on the surface of said food is hydrolyzed by said alkaline mist.

These and other features of the present invention will be described in detail in the embodiment part.

### BRIEF DESCRIPTION OF THE DRAWINGS

Features, aspects and advantages of the present invention will become obvious by reading the following description of non-limiting embodiments with the aid of appended drawings. In the drawings, the same or similar reference numerals refer to the same or similar steps or means.
Figure 1 schematically shows the structure of a device for removing the residues from the food according to an embodiment of the invention;
Figure 2 shows a flowchart of a method for removing the residues from the food according to an embodiment of the invention;
Figure 3 schematically shows the structure of the electrolysis unit.

### DETAILED DESCRIPTION OF EMBODIMENTS

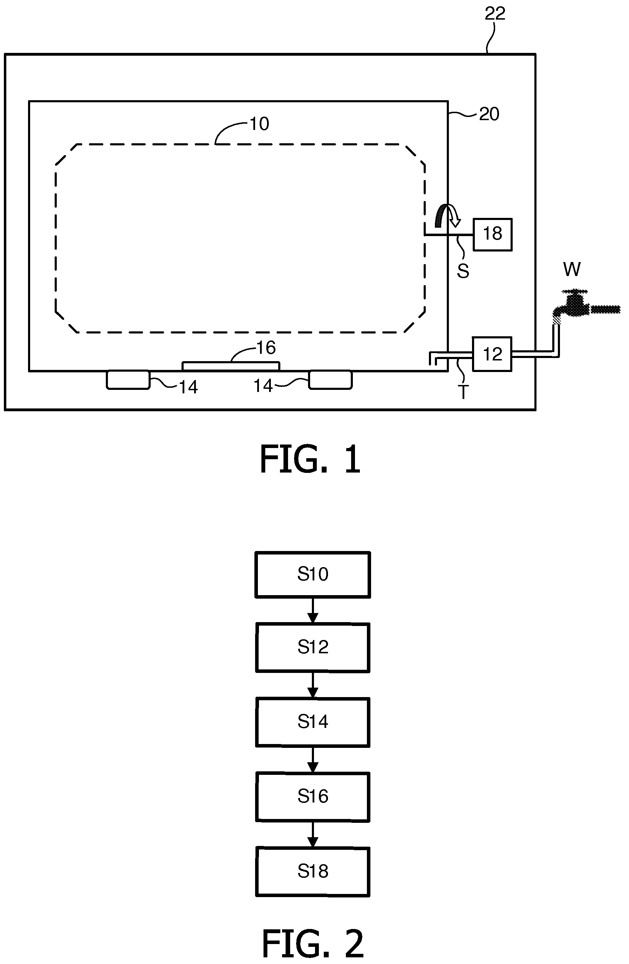

The embodiments of the invention will be elucidated with reference to Fig. 1 to Fig. 3.

The device for cleaning food, shown in Fig.1, comprises a waterproof cavity 20, a rotating basket 10, a providing unit 12 for providing alkaline water, and an ultrasound-humidifying unit 14. The rotating basket 10 is mounted at the center of the cavity 20, contains the food with residues such as pesticide on the surface, and separates the food from the alkaline water with high temperature at the bottom of the cavity 20. The ultrasound-humidifying unit 14 is mounted at the bottom of the cavity 20. The providing unit 12 is mounted out of the cavity 20, and comprises an inlet 120 and an electrolysis unit 121 connected with the inlet 120. The electrolysis unit 121 is connected with the cavity 20 through a tube T1, in order to pour the alkaline water to the bottom of the cavity 20, whereby the electrolysis unit 121 is connected with the ultrasound-humidifying unit 14. A motor 18 is mounted on the outside of the cavity 20, and is connected with the rotating basket 10 with a shaft S. The cavity 20, the motor 18 and the electrolysis unit 121 are mounted inside a housing 22 of the device, and the inlet 120 is mounted on the housing 22. Preferably, the device further comprises a heater 16 mounted at the bottom of the cavity 20. Preferably, the device further comprises a tank 19 for storing waste acid water. The tank 19 is mounted inside the housing 22 and out of the cavity 20, and it is connected with the electrolysis unit 121 through a tube T2 and with the cavity 20 through a tube T3. Besides, the device further comprises a Micro Control Unit (MCU for short, not shown in Fig. 1) for controlling the providing unit 12, the ultrasound humidifier 14, the heater 16 and the motor 18.

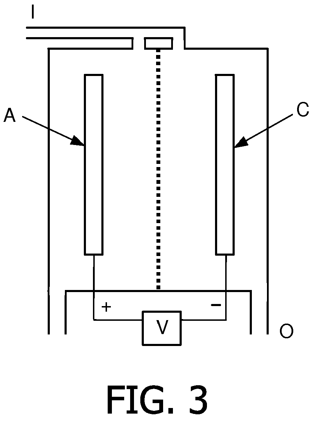

With reference to Fig. 2, firstly, the tap water W is poured into the electrolysis unit 121 through the inlet 120. In step S10, the electrolysis unit 121 electrolyzes the tap water so as to generate alkaline water. The electrolysis process of water is common knowledge for those skilled in the art. The specification would give a brief description on the operation of the electrolysis unit 121 with reference to the structure of the electrolysis unit 121 shown in Fig. 3. The electrolysis unit 121 comprises a power source V, electrodes A and C, connected with the anode and cathode of the power source V respectively and made of platinum or other unreactive metals, and a water container. The membrane M separates the water fields in which the anode A and the cathode C are respectively placed. The tap water flows into the water fields in which the anode A and the cathode C are respectively placed through the inlet I. After the tap water is poured into the water container, the anode A and the cathode C extend into the tap water and are placed near each other. The power source V passes an electric current through the water using the anode A and the cathode C. The cathode C provides electrons, thus the OH- ions will accumulate at the cathode C and alkaline water is generated. The positive ions in the alkaline water are metal ions such as Na+, Ca+, Mg+, which already exist in tap water. The anode A loses electrons, thus the H+ ions will accumulate at the anode A and acid water is generated. The negative ions in the acid water are ions such as Cl-, which already exist in tap water. The membrane M separates the alkaline water and the acid water. The generated alkaline water flows out of the container through outlet O1, and is poured into the cavity 20 through the tube T1 for further treatment by the ultrasound-humidifying unit 14. The generated acid water flows out of the container through outlet 02, and is poured into the tank 19 through the tube T2 and stored therein. It should be noted that the "tap water" written in the embodiment and the claims is not limited to the water provided to users through the water-feeding pipe by the pumps of the urban water supply system. The tap water defined in the specification also comprises any one of:
□ Water drawn from wells or springs;
□ Mineral water in cans, bottles or buckets bought in the market;
□ Purified water with ion addictive.

All kinds of water, which can be electrolyzed to generate alkaline water and acid water, belong to the scope of tap water defined in the specification, and fall into the protection scope of the claims of the invention.

Experiments show that a better effect of pesticide removing is achieved when the pH value of the alkaline water is higher than 9.

When it is needed to generate alkaline water with a precise pH value, since the pH value of the generated water relates to the conductivity of the tap water: the higher the conductivity, the higher the pH value is under the same conditions, the device further comprises a sensor for conductivity and a controlling unit. Under the circumstance that the voltage of the power source V is fixed, the sensor for conductivity detects the conductivity of the tap water, and the controlling unit controls the flow of the tap water poured in and the flow of the alkaline water flowing out, so as to control the pH value of the alkaline water to meet the requirement.

In an altered embodiment, the electrolysis unit 121 of the providing unit 12 is substituted by a tank 121A for alkaline water. The alkaline water is bought or mixed by the user, and is poured into the tank 121A for alkaline water through the inlet 120. The tank 121A for alkaline water stores the alkaline water, and pours the alkaline water into the cavity 20 through the tube T1 for the humidifying unit 14. In this embodiment, the device controls the flow and speed of the alkaline water by switching the tube T1 on/off. In another altered embodiment, the providing unit 12 only comprises the inlet 120, which is connected with the cavity 20. The alkaline water bought or mixed by the user is poured into the cavity 20 directly through the inlet 120. In this embodiment, the flow and speed of the alkaline water is controlled by the user. It should be understood that the providing unit 12 is not limited to the aforesaid embodiments, and any component being able to provide alkaline water can be used by the invention and falls into the protection scope of the claims of the invention.

In a preferable embodiment, the device comprises a pH value controller for controlling the pH value of the alkaline water according to time for cleaning said food set by the user: the shorter the cleaning time is, the higher the pH value of the alkaline water is; and the longer the cleaning time is, the lower the pH value of the alkaline water is. In this way, it not only guarantees the pesticide-cleaning effect of the alkaline mist, but also prevents alkaline substance with high alkalinity from damaging the food by an excessively long cleaning time. In an example, the device offers several modes for choosing: a slow mode, a normal mode and a fast mode. In the slow mode, the device operates for 2 hours, and the electrolysis unit generates alkaline water with a pH value of 9. In the normal mode, the device operates for 1 hour, and the electrolysis unit generates alkaline water with a pH value of 10.5. In the fast mode, the device operates for a half hour, and the electrolysis unit generates alkaline water with a pH value of 12. It should be noted that the several modes and cleaning time are exemplifying the relation between pH value of alkaline water and cleaning time, and do not limit the claims of the invention. In the aforesaid embodiment that takes the needed pH value as standard, the providing unit comprises the electrolysis unit for electrolyzing tap water so as to generate the alkaline water, under the condition that the voltage of the power source is fixed, in order to obtain the required pH value, the pH value controller controls the speed of the flow of the tap water poured in and the speed of the flow of the alkaline water flowing out, so as to control the pH value of the alkaline water to meet the requirement. In the aforesaid embodiment when the providing unit does not generate alkaline water but is provided with alkaline water poured by the user, the pH value controller adds tap water or alkaline substance into the alkaline water poured in to decrease or increase its pH value, so as to control the pH value of the alkaline water to meet the requirement.

In a preferable embodiment, in step S12, the heater 16 heats the alkaline water to a predefined temperature, so as to generate heated alkaline water. Generally, the heater 16 requires that the water to be heated reaches a minimum water level. For example, the heater should be submerged by the water in order to prevent dry heating. Practically, one water level sensor could be mounted inside the cavity 20, in order to detect whether the alkaline water poured into the cavity 20 reaches the water level for the safe heating of the heater 16. When the alkaline water reaches the water level for heating, the heater 16 starts to operate. The alkaline water is preferably heated to a temperature between 55 degrees Celsius and 65 degrees Celsius.

In an altered embodiment, the heater 16 is located between the inlet 120 and the electrolysis unit 121, and is mounted along the tube in the form of a sleeve. The heater 16 heats the tap water to a predefined temperature before the tap water is electrolyzed by the electrolysis unit 121, so as to generate heated alkaline water. In this embodiment, heating prior to electrolyzing could avoid the drop in pH value of alkaline water caused by heating the alkaline water after the electrolysis. Besides, the pH value of the alkaline water generated from heated tap water could increase, due to that the conductivity of the tap water is increased by heating. Preferably, when the alkaline water with a precise PH value is needed to be generated, the device further comprises another controller, for adjusting the heater 16 to increase or decrease the temperature of the heated tap water according to the pH value of the generated alkaline water, so as to control the pH value of the alkaline water generated from the heated tap water. The alkaline water is preferably heated to a temperature between 55 degrees Celsius and 65 degrees Celsius.

After that, in step S 14, the ultrasound-humidifying unit 14 applies ultrasound oscillation to the heated alkaline water thus generating heated alkaline mist. Generally, the ultrasound-humidifying unit requires that the level of the water to be humidified is within a scope of water level, for example, the depth of water should be no less than 1 cm and no more than 3cm. Several water level sensors could be mounted inside the cavity 20, in order to detect whether water level of the alkaline water in the cavity 20 is within the required scope of water level for humidifying. When the alkaline water is between the minimum and maximum water level, the ultrasound-humidifying unit 14 operates; otherwise, the ultrasound-humidifying unit 14 is off. When the alkaline water is above the maximum water level, the electrolysis unit 121 is off and the tube T1 is switched off. When the alkaline water is below the minimum water level, the electrolysis unit 121 starts to operate and the tube T1 is switched on, in order to add alkaline water into the cavity 20.

The diameter of the mist particle of the alkaline mist is no more than DV0.99 800µm, and preferably no more than DV0.99 400µm.

In step S 14, the effect of the ultrasound oscillation applied by the ultrasound humidifying unit 14 disperses the heated alkaline mist in the cavity 20, thus applies the heated alkaline mist to the surface of the food contained in the rotating basket 10 through the eyelets on the rotating basket 10, whereby the residue on the surface of the food is hydrolyzed by the alkaline mist. During the procedure of cleaning, the ultrasound humidifying unit 14 operates in one of the following ways:
- continuously, that is being in operation all the time;
- periodically, that is being on or off alternatively, at intervals of several seconds, minutes or scores of minutes;
- in pulse, that is on or off alternatively, at intervals of less than one second.

In this way, the temperature of the surface of the food is greatly increased for a short while, after the food contact the heated alkaline mist, thus the hydrolyzation of pesticide residue on the surface of the food is accelerated. Meanwhile, the temperature inside the food would not increase excessively, thus the nutrition, appearance and taste of the food are maintained to a certain degree.

During the procedure of cleaning, the alkaline mist agglomerates in the air or on the surface of the food, and falls onto the bottom of the cavity 20 thus turns into alkaline water again. The ultrasound-humidifying unit 14 humidifies the fallen alkaline water again, and in this way the alkaline water is recycled.

The device could also use pressure spraying humidifying units as a substitute for the ultrasound-humidifying unit. The pressure spraying humidifying unit could be mounted on the top of the cavity 20 with nozzles facing the food, and is connected with the bottom of the cavity 20 through a tube. The pressure spraying humidifying unit drains the alkaline water at the bottom of the cavity 20 through the tube, inject the alkaline water out through the nozzles at a certain pressure, thus generate and apply the alkaline mist to the food. The device could also use the ultrasound-humidifying unit and the pressure spraying humidifying units together to improve the effect of cleaning. It should be understood that all kinds of humidifying units fall into the protection scope of the claims of the invention.

Preferably, the motor 18 rotates the rotating basket 10 to roll the food contained in the basket, to make the surface of said food evenly contact with said alkaline mist, in order to ensure that the pesticide residue is fully hydrolyzed and ensure edible security.

In a preferred embodiment, the device comprises a time controller for controlling time for cleaning the food according to the pH value of the alkaline water: the lower the pH value of the alkaline water, the longer the cleaning time; and the higher the pH value of the alkaline water, the shorter the cleaning time. In this way, it not only guarantees the cleaning effect of the alkaline mist in the device, but also prevents the alkaline substance with high alkalinity from damaging the vegetables and fruits by an excessively long cleaning time. What's more, the time for cleaning could vary according to the weight of the food.

Preferably, after the residue on the surface of the food is removed and the alkaline water in the cavity 20 is drained, in step S18, the device pours tap water through the inlet 120 directly into the cavity 20 to rinse the food. In one embodiment, the level of the tap water in the cavity 20 is high so that the food contact with the tap water and are rinsed in the tap water. The residue of alkaline substance is removed. In this embodiment, the cavity 20 operates as a rinsing unit. Preferably, the rotating basket 10 rolls the food contained in the basket driven by the motor 18. In another embodiment, the level of the tap water in the cavity 20 is low, and the ultrasound humidifying unit 14 functions to generate neutral mist to rinse the food. In this embodiment, the cavity 20 and the ultrasound-humidifying unit 14 operates as a rinsing unit. It should be understood that other kinds of methods and components for rinsing fall into the protection scope of the invention too.

In another embodiment, after the alkaline water is provided by the providing unit 12, the alkaline water is poured into the cavity 20 at a relatively high level before the heater 16 heats the alkaline water and the ultrasound humidifying unit 14 humidifies the heated alkaline water. The alkaline water contacts the food and soaks the food, to spread the alkaline water onto the surface of the food, so as to improve the effect of cleaning by the alkaline mist. In this case, the cavity 20 operates as the soaking unit. Preferably, the rotating basket 10 rolls the food contained in the basket driven by the motor 18, to evenly spread the alkaline water on the surface of the food. After that, the device drains the alkaline water at high level to the operation water level of the heater 16 and the ultrasound-humidifying unit 14, and separates the alkaline water from the food. Then the heater 16 and the ultrasound-humidifying unit 14 operate and start the cleaning processing of the steps S12 and S14.

The device could provide a user interface for the user to set the time for cleaning, the temperature, the pH value of the alkaline mist and so on. The interface conveys the setting from the user to the MCU. And the MCU controls the functions of electrolysis unit 121, the ultrasound humidifying unit 14, the heater 16 and the motor 18, and the on/off of the tube T1, T2 and T3 according to the setting from the user to finish the operation assigned by the user. The application of controlling of MCU is common knowledge for those skilled in the art, and the specification would give an unnecessary description.

It should be understood that although the alkaline water could be heated in order to use heated alkaline mist to accelerate the hydrolyzation of the toxic residue of pesticide on the food, the heater is not necessary for the invention. In an altered embodiment, the device does not comprise the heater 16, and the humidifying unit 14 humidifies alkaline water at normal temperature. The alkaline mist at normal temperature hydrolyzes the pesticide residue for several hours to clean the food, and avoids that the heated alkaline mist at a high temperature damages the food.

In an altered embodiment, the rotating basket 10 is replaced by a container 10A, which is swung by the motor 18. The container 10A rolls the contained food, and makes the surface of the food evenly contact the alkaline mist. In another altered embodiment, the device comprises a handle connected with the rotating basket 10 instead of the motor 18 and the shaft S. This handle is for being swung by the user to drive the rotating basket, in order to roll the contained food, and makes the surface of the food evenly contact with the alkaline mist. In yet another altered embodiment, the device does not comprise the motor 18 and the shaft S, and the rotating basket is replaced by a separating net 10B mounted in the center of the cavity 20. The separating net 10B keeps the food in the center of the cavity 20, and separate them from the heated alkaline water at high temperature while being able to contact the alkaline mist. It should be understood that container in any shape falls into the protection scope of the claims of the invention. Besides, in still another embodiment, for example, the device does not comprise the container 10, the user puts the food into a plastic basket and places the basket on the brackets mounted in the middle of the side wall of the cavity 20.

Although the embodiments of the present invention have been explained hereinabove in detail, it should be noted that the above-described embodiments are for purpose of illustration only, and not construed as limitation of the invention. The present invention is not limited to these embodiments.

Those ordinary skilled in the art could understand and realize modifications to the disclosed embodiments, through studying the description, drawings and appended claims. All such modifications, which do not depart from the spirit of the invention, are intended to be included within the scope of the appended claims. The word "comprising" does not exclude the presence of elements or steps not listed in the claim or in the description. The word "a" or "an" preceding an element does not exclude the presence of a plurality of such elements. In the practice of present invention, several technical features in the claim can be embodied by one component. In the claims, any reference signs placed between parentheses shall not be construed as limiting the claim.

## Claims

1. A device for cleaning food, comprising:
- a providing unit (12), for providing alkaline water;
- a heater (16) for heating said alkaline water to a predefined temperature, so as to generate heated alkaline water;
- an ultrasound humidifying unit (14), connected with said providing unit (12), for applying ultrasound oscillation to the heated alkaline water so as to generate heated alkaline mist and applying said heated alkaline mist to the surface of said food in order to hydrolize the residue on the surface of said food by said heated alkaline mist.

2. A device according to claim 1, wherein the pH value of said alkaline water is larger than 9, and said providing unit (12) comprises:
- an inlet (120) for pouring tap water; and
- an electrolysis unit (121), for electrolyzing said tap water so as to generate said alkaline water.

3. A device according to claim 1, further comprising:
- a soaking unit for soaking said food using said alkaline water.

4. A device according to claim 2, further comprising:
- a rinsing unit for rinsing said food cleaned by said alkaline mist, using any one of:
- tap water inputted through said inlet (120); or
- mist generated from tap water poured through said inlet (120).

5. A device according to claim 1, further comprising at least one of:
- a pH value controller for controlling the pH value of said alkaline water according to time set for cleaning said food;
- a time controller for controlling time for cleaning said food according to the pH value of said alkaline water.

6. A device according to claim 1, wherein said predefined temperature is between 55 degrees Celsius and 65 degrees Celsius.

7. A device according to any one of claims 1 to 7, further comprising:
- a cavity (20), for containing said food, said humidifying unit (14) is mounted at the bottom of said cavity (20), said alkaline water provided by said providing unit (12) is poured to said cavity (20) through a tube (T1), and said cavity (20) seals said alkaline mist within said cavity (20).

8. A device according to claim 7, further comprising:
- a container (10), mounted at the center of said cavity (20), for containing said food.

9. A device according to claim 8, wherein said container (10) comprising a rotating basket which rotates driven by a motor (18) via a shaft (S) connecting said basket and said motor, for rolling said food, whereby the surface of said food evenly contacts with said alkaline mist.

10. A device according to claim 1, wherein a diameter of particles of said heated alkaline mist is smaller than 800 µm.

11. A method for cleaning food, comprising the steps of:
- providing alkaline water;
- heating said alkaline water to a predefined temperature so as to generate heated alkaline water;
- applying ultrasound oscillation to the heated alkaline water so as to generate heated alkaline mist;
- applying said heated alkaline mist to the surface of said food, whereby the residue on the surface of said food is hydrolyzed by said heated alkaline mist.

12. A method according to claim 11, wherein the pH value of said alkaline water is larger than 9, said providing step comprises the steps of:
- providing tap water;
- electrolyzing said tap water so as to generate said alkaline water;

13. A method according to claim 11, further comprising at least one of the steps:
- controlling the pH value of said alkaline water according to time set for cleaning food;
- controlling time for cleaning said food according to the pH value of said alkaline water.

14. A method according to claim 11, wherein said predefined temperature is between 55 degrees Celsius and 65 degrees Celsius.

15. A method according to claim 11, wherein a diameter of particles of said heated alkaline mist is smaller than 800 µm.

## Patentansprüche

1. Vorrichtung zur Nahrungsmittelreinigung, folgendes umfassend:
- eine Bereitstellungseinheit (12), zum Bereitstellen von alkalischem Wasser;
- ein Heizgerät (16) zum Erwärmen des besagten alkalischen Wassers auf eine vorbestimmte Temperatur, um erwärmtes alkalisches Wasser zu erzeugen;
- eine Ultraschall-Befeuchtungseinheit (14), die mit der besagten Bereitstellungseinheit (12) verbunden ist, um eine Ultraschallschwingung auf das erwärmte alkalische Wasser anzuwenden, um einen erwärmten alkalischen Wassernebel zu erzeugen, und um den erwärmten alkalischen Wassernebel auf die Oberfläche des besagten Nahrungsmittels aufzubringen, um Rückstände auf der Oberfläche des besagten Nahrungsmittels mit dem besagten erwärmten alkalischen Wassernebel zu hydrolysieren.

2. Vorrichtung nach Anspruch 1, wobei der pH-Wert des besagten alkalischen Wassers größer als 9 ist, und die besagte Bereitstellungseinheit (12) folgendes umfasst:
- einen Einlass (120) für fließendes Leitungswasser; und
- eine Elektrolyseeinheit (121) zur Elektrolyse des besagten Leitungswassers, um das besagte alkalische Wasser zu erzeugen.

3. Vorrichtung nach Anspruch 1, darüber hinaus folgendes umfassend:
- eine Einweicheinheit zum Einweichen des besagten Nahrungsmittels unter Verwendung des besagten alkalischen Wassers.

4. Vorrichtung nach Anspruch 2, darüber hinaus folgendes umfassend:
- eine Spüleinheit zum Spülen des besagten, durch den besagten alkalischen Wassernebel gereinigten Nahrungsmittels unter Verwendung von irgendeinem der folgenden Mittel:
- Leitungswasser, das durch den besagten Einlass (120) zugeführt wird; oder
- Wassernebel, der aus dem Leitungswasser erzeugt wird, das durch den besagten Einlass (120) einströmt.

5. Vorrichtung nach Anspruch 1, darüber hinaus zumindest eines der folgenden Elemente umfassend:
- einen pH-Wert Regler zum Regeln des pH-Werts des besagten alkalischen Wassers entsprechend der Zeit, die zum Reinigen des besagten Nahrungsmittels eingestellt wurde;
- eine Zeitsteuerung zum Steuern der Zeit für das Reinigen des besagten Nahrungsmittels gemäß dem pH-Wert des besagten alkalischen Wassers.

6. Vorrichtung nach Anspruch 1, wobei die besagte vorbestimmte Temperatur zwischen 55 Grad Celsius und 65 Grad Celsius liegt.

7. Vorrichtung nach irgendeinem der Ansprüche 1 bis 7, darüber hinaus folgendes umfassend:
- eine Vertiefung (20) zum Aufnehmen des besagten Nahrungsmittels, wobei die besagte Befeuchtungseinheit (14) am Boden der besagten Vertiefung (20) montiert ist, wobei das besagte alkalische Wasser, das durch die besagte Bereitstellungseinheit (12) zugeführt wird, durch ein Rohr (T1) in die besagte Vertiefung (20) gegossen wird, und die besagte Vertiefung (20) den besagten alkalischen Wassernebel innerhalb der besagten Vertiefung (20) einschließt.

8. Vorrichtung nach Anspruch 7, darüber hinaus folgendes umfassend:
- einen Behälter (10), der in der Mitte der besagten Vertiefung (20) montiert ist, um das besagte Nahrungsmittel aufzunehmen.

9. Vorrichtung nach Anspruch 8, wobei der besagte Behälter (10) einen drehenden Korb umfasst, der durch einen Motor (18) über eine Welle (S) angetrieben wird, die mit dem besagten Korb und dem besagten Motor verbunden ist, um das besagte Nahrungsmittel zu drehen, wodurch die Oberfläche des besagten Nahrungsmittels gleichförmig mit dem besagten alkalischen Wassernebel in Berührung kommt.

10. Vorrichtung nach Anspruch 1, wobei ein Durchmesser von Teilchen des besagten erwärmten alkalischen Wassernebels kleiner als 800 µm ist.

11. Verfahren zum Reinigen von Nahrungsmitteln, die folgenden Schritte umfassend:
- Bereitstellen von alkalischem Wasser;
- Erwärmen des besagten alkalischen Wassers auf eine vorbestimmte Temperatur, um erwärmtes alkalisches Wasser zu erzeugen;
- Anwenden einer Ultraschallschwingung auf das erwärmte alkalische Wasser, um einen erwärmten alkalischen Wassernebel zu erzeugen;
- Aufbringen des erwärmten alkalischen Wassernebels auf die Oberfläche des besagten Nahrungsmittels, wobei die Rückstände auf der Oberfläche des besagten Nahrungsmittels mit dem besagten erwärmten alkalischen Wassernebel hydrolysiert wird.

12. Verfahren nach Anspruch 11, wobei der pH-Wert des besagten alkalischen Wassers größer als 9 ist, wobei der besagte Bereitstellungsschritt die folgenden Schritte umfasst:
- Bereitstellen von Leitungswasser;
- Elektrolyse des besagten Leitungswassers, um das besagte alkalische Wasser zu erzeugen.

13. Verfahren nach Anspruch 11, darüber hinaus zumindest einen der folgenden Schritte umfassend:
- Regeln des pH-Werts des besagten alkalischen Wassers gemäß der Zeit, die zum Reinigen des besagten Nahrungsmittels eingestellt wurde;
- Steuern der Zeit für das Reinigen des besagten Nahrungsmittels gemäß dem pH-Wert des besagten alkalischen Wassers.

14. Verfahren nach Anspruch 11, wobei die besagte vorbestimmte Temperatur zwischen 55 Grad Celsius und 65 Grad Celsius liegt.

15. Verfahren nach Anspruch 11, wobei ein Durchmesser von Teilchen des besagten erwärmten alkalischen Wassernebels kleiner als 800 µm ist.

## Revendications

1. Dispositif pour nettoyer des aliments, comprenant :
- une unité de fourniture (12), pour fournir de l'eau alcaline ;
- un élément chauffant (16) pour chauffer ladite eau alcaline jusqu'à une température prédéfinie, afin de générer de l'eau alcaline chauffée ;
- une unité d'humidification ultrasonore (14), raccordée à ladite unité de fourniture (12), pour appliquer une oscillation ultrasonore sur l'eau alcaline chauffée afin de générer un brouillard alcalin chauffé et appliquer ledit brouillard alcalin chauffé sur la surface desdits aliments afin d'hydrolyser le résidu sur la surface desdits aliments par l'intermédiaire dudit brouillard alcalin chauffé.

2. Dispositif selon la revendication 1, dans lequel la valeur de pH de ladite eau alcaline est supérieure à 9, et ladite unité de fourniture (12) comprend :
- une entrée (120) pour verser de l'eau de robinet ; et
- une unité d'électrolyse (121), pour électrolyser ladite eau de robinet afin de générer ladite eau alcaline.

3. Dispositif selon la revendication 1, comprenant en outre :
- une unité de trempage pour tremper lesdits aliments en utilisant ladite eau alcaline.

4. Dispositif selon la revendication 2, comprenant en outre :
- une unité de rinçage pour rincer lesdits aliments nettoyés par ledit brouillard alcalin, en utilisant l'un quelconque parmi :
- de l'eau de robinet entrée par l'intermédiaire de ladite entrée (120) ; ou
- un brouillard généré à partir de l'eau de robinet versée par l'intermédiaire de ladite entrée (120).

5. Dispositif selon la revendication 1, comprenant en outre au moins l'un parmi :
- un dispositif de commande de valeur de pH pour commander la valeur de pH de ladite eau alcaline selon le temps réglé pour nettoyer lesdits aliments ;
- un dispositif de commande de temps pour commander le temps pour nettoyer lesdits aliments selon la valeur de pH de ladite eau alcaline.

6. Dispositif selon la revendication 1, dans lequel ladite température prédéfinie est entre 55 degrés Celsius et 65 degrés Celsius.

7. Dispositif selon l'une quelconque des revendications 1 à 7, comprenant en outre :
- une cavité (20), pour contenir lesdits aliments, ladite unité d'humidification (14) est montée au fond de ladite cavité (20), ladite eau alcaline fournie par ladite unité de fourniture (12) est versée dans ladite cavité (20) par l'intermédiaire d'un tube (T1), et ladite cavité (20) enferme de façon étanche ledit brouillard alcalin à l'intérieur de ladite cavité (20).

8. Dispositif selon la revendication 7, comprenant en outre :
- un contenant (10), monté au centre de ladite cavité (20), pour contenir lesdits aliments.

9. Dispositif selon la revendication 8, dans lequel ledit contenant (10) comprend un panier rotatif qui tourne, entraîné par un moteur (18) par l'intermédiaire d'un arbre (S) raccordant ledit panier et ledit moteur, pour faire rouler lesdits aliments, moyennant quoi la surface desdits aliments entre uniformément en contact avec ledit brouillard alcalin.

10. Dispositif selon la revendication 1, dans lequel un diamètre de particules dudit brouillard alcalin chauffé est inférieur à 800 µm.

11. Procédé pour nettoyer des aliments, comprenant les étapes de :
- la fourniture d'eau alcaline ;
- le chauffage de ladite eau alcaline jusqu'à une température prédéfinie afin de générer de l'eau alcaline chauffée ;
- l'application d'oscillation ultrasonore sur l'eau alcaline chauffée afin de générer un brouillard alcalin chauffé ;
- l'application dudit brouillard alcalin chauffé sur la surface desdits aliments, moyennant quoi le résidu sur la surface desdits aliments est hydrolysé par ledit brouillard alcalin chauffé.

12. Procédé selon la revendication 11, dans lequel la valeur de pH de ladite eau alcaline est supérieure à 9, ladite étape de la fourniture comprend les étapes de :
- la fourniture d'eau de robinet ;
- l'électrolyse de ladite eau de robinet afin de générer ladite eau alcaline.

13. Procédé selon la revendication 11, comprenant en outre au moins l'une des étapes :
- la commande de la valeur de pH de ladite eau alcaline selon un temps réglé pour nettoyer des aliments ;
- la commande de temps pour nettoyer lesdits aliments selon la valeur de pH de ladite eau alcaline.

14. Procédé selon la revendication 11, dans lequel ladite température prédéfinie est entre 55 degrés Celsius et 65 degrés Celsius.

15. Procédé selon la revendication 11, dans lequel un diamètre de particules dudit brouillard alcalin chauffé est inférieur à 800 µm.
